# EUROPEAN PATENT APPLICATION

(11) **EP 4 418 220 A1**
(43) Date of publication of application: **21.08.2024**
(21) Application number: 23157529.1
(22) Date of filing: 20.02.2023
(51) Int. Cl.: G07C 9/00

(54) **ACCESS CONTROL METHOD AND SYSTEM BASED ON ACCESS DECISION POINT(S) AND ACCESS ENFORCEMENT POINT(S)**

(71) Applicant: dormakaba Schweiz AG, 8623 Wetzikon (CH)
(72) Inventor: Studerus, Paul, 8165 Oberweningen (CH); Mueller, Markus, 8153 Rümlang (CH); Buholzer, Martin, 8620 Wetzikon (CH); Duetschler, Urs, 8620 Wetzikon (CH)
(74) Representative: Balder IP Law, S.L.

(57) **Abstract**

According to a first aspect of the present invention, a computer-implemented access control method is provided, being performed by an access control system. The access control system may include at least one access decision point being configured to communicate wirelessly with a plurality of low-power access enforcement points. Each low-power access enforcement point may be configured to operate an access point, in particular by unlocking and/or locking the access point. The low-power access enforcement points may have energy harvesting means. The low-power access enforcement points may not be connected to a power grid. The method may comprise instruction-polling, by the plurality of low-power access enforcement points, wherein instruction-polling includes repeatedly sending instruction requests to the at least one access decision point in defined time intervals. The method may comprise generating, by the at least one access decision point, a respective instruction dedicated to a respective low-power access enforcement point upon receiving a respective instruction request from the respective low-power access enforcement point, wherein if the at least one access decision point detected an authentication medium, preferably a mobile device, of a user and determined an intent to unlock the respective access enforcement point, the respective instruction includes an unlock-command causing the respective low-power access enforcement point to unlock, and else, the respective instruction includes a no-action-command. The method may comprise sending, by the at least one access decision point, the respective instruction to the respective low-power access enforcement point.

## Description

### FIELD OF THE INVENTION

The present invention relates to an access control method and system, in particular to an energy-efficient access control method and system based on access decision point(s) and access enforcement points(s). Further, the present invention relates to using an access decision point and to using a low-power access enforcement point in an access control method. Further, the present invention relates to a computer corresponding program.

### BACKGROUND OF THE INVENTION

Entry systems have become widely used in applications in particular for access control in building facilities. Access control relates to granting, denying or limiting access to particular section(s) of a controlled area, usually by means of some level of access control by use of a barrier, such as a door, turnstile, parking gate, elevator door, or other barrier.

Various prior art systems are known for access control based on various principles using corresponding technologies. According to a first known approach, referred to as "who you are", access control is aimed to be achieved by identifying the individuals themselves, implemented using biometric identification technologies. One particular biometric identification technology used for people flow control uses face recognition to identify individuals. While face recognition technology has its merits, it is prone to error and is therefore often unreliable. Furthermore, face recognition technology has proven to be greatly affected by face covering, being for cultural and/or hygienic reasons. Further, face recognition is based on at least one camera which is always active which is not energy efficient. Alternative particular biometric identification technology used for access flow control uses fingerprint to identify individuals. Such is however disadvantageous as fingerprint recognition is often unreliable (slow, affected by the dryness of one's skin) and is particularly disadvantageous as it requires contact with a frequently used surface (the fingerprint reader).

According to a further known approach, referred to as "what you have", access control is based on identifying individuals using something the user possesses, referred to as a token or authentication medium. Particularly advantageous are keyless entry systems due to their convenience and/or reliability. Keyless entry systems may for example operate in that an BLE (Bluetooth Low Energy) or UWB (Ultra-Wideband) access control terminal executes a wireless communication with an authentication device, such as a keyless fob, a keycard or an authentication medium incorporating a corresponding wireless transceiver. Once said wireless communication between the access control terminal and the authentication medium has been executed, the access control terminal exchanges data messages with the authentication medium. The authentication can be initiated either by a user, for instance by pressing a button on the authentication medium to trigger transmission of authentication data to the access control terminal. Upon successful authentication, i.e. verification of user credentials (e.g. by correlating authentication data received from the authentication device with a list of authorized users), the access control terminal grants access to the user in possession of the respective authentication medium, e.g. by opening said barrier. On the other hand, if the authentication fails, the access control terminal denies access to the user in possession of the respective authentication medium, e.g. by locking the barrier/ by keeping the barrier locked.

For close-range applications, a radio-frequency identification (RFID) transponder (or tag) is often used, which has mostly replaced earlier magnetic stripe cards. Other current solutions use infra-red systems or radio systems to transmit an authenticating signal from an authentication medium to an access control terminal of a security control system. Close proximity keyless systems, (i.e. between direct contact and a threshold of a few centimeters), for example RFID based systems, allow determination of a user's proximity to a barrier by appropriate placement of a reader of the access control terminal. However, as their name implies close-proximity keyless systems suffer from the disadvantage that they require a very close proximity of the authentication medium to the access control terminal. In order to overcome this disadvantage, mid-range keyless entry systems have been proposed, in particular based on BLE and/or UWB communication. UWB systems are advantageous since they allow reliable mid-range communication without a user having to precisely identify the reader device. As the communicating range between an authentication device and an UWB access control terminal increases, the convenience and ease-of-use increases, because the authentication medium does not need to be placed in very close range, such as less than one centimeter from the UWB access control terminal. The user no longer needing to precisely locate the UWB access control terminal (or its antenna) not only adds convenience but also has the potential to speed up the process, thereby increasing the throughput through a barrier.

The network topologies of said access control systems typically comprise a central access rights server to which each access control terminal is connected. An authentication medium held by a user is brought close to an access control terminal for wireless exchange of credentials. These credentials are then transmitted from the access control terminal to the server, which performs a look-up in a database of access rights. If access is granted, the server sends a signal to the access control terminal, which allows the user access through an electronically controlled doorway. The disadvantage of this topology is that it requires each access control terminal to be permanently connected to the server, which is associated with considerable cost in wiring and presents a single point of failure. More modern access control systems have relegated access control decisions to the access control terminals themselves. If these access control terminals are not connected to the server, however, the issue then arises of how and when to update the database of access rights in each access control terminal.

Other access rights systems invert the situation by storing a database or table of the user's access rights in the mediums themselves. At an access control point, the access control terminals and the authentication medium exchange data containing an identifier of the access control terminal and the user's access rights at that access control point. Authentication mediums are however vulnerable entities with respect to date protection. Further, updating access rights becomes cumbersome as every affected party must have its authentication medium updated with new access rights.

None of the known concepts provide an energy-efficient and at the same time easy-to-use solution. Therefore, there is a need for such solution.

### SUMMARY OF THE INVENTION

It is an object of the present invention is to provide an access control method and system which at least partially overcomes the above-mentioned disadvantages. In particular, it is an object of the present invention to provide an access control method and system which is energy-efficient and intuitive to use.

According to the present invention, the above-mentioned objects are addressed through the features of the independent claims. In addition, further advantageous embodiments follow from the dependent claims and the description.

According to a first aspect of the present invention, a computer-implemented access control method is provided, being performed by an access control system. The access control system may include at least one access decision point being configured to communicate wirelessly with a plurality of low-power access enforcement points. Each low-power access enforcement point may be configured to operate an access point, in particular by unlocking and/or locking the access point. The low-power access enforcement points may have energy harvesting means. The low-power access enforcement points may not be connected to a power grid. The method may comprise instruction-polling, by the plurality of low-power access enforcement points, wherein instruction-polling includes repeatedly sending instruction requests to the at least one access decision point in defined time intervals. The method may comprise generating, by the at least one access decision point, a respective instruction dedicated to a respective low-power access enforcement point upon receiving a respective instruction request from the respective low-power access enforcement point, wherein if the at least one access decision point detected an authentication medium, preferably a mobile device, of a user and determined an intent to unlock the respective access enforcement point, the respective instruction includes an unlock-command causing the respective low-power access enforcement point to unlock, and else, the respective instruction includes a no-action-command. The method may comprise sending, by the at least one access decision point, the respective instruction to the respective low-power access enforcement point.

The term access decision point may include any kind of access controller which is capable to decide whether an access point should be unlocked or not. It may be capable of determining an intent to unlock an access point. Further, it may be capable of checking the validity of a user's credential. An access decision point may comprise an integrated and/or spaced apart tracking system which is capable of tracking a position of a user's authentication medium. Examples for said tracking systems are camera tracking systems and/or ultra-wideband tracking systems. In case if the access decision point comprises an ultra-wideband tracking system, the ultra-wideband tracking system may include a plurality of ultra-wideband anchors facilitating ranging of the authentication medium, in particular to determine successive positions of the authentication medium. Thus, an access decision point according to the present invention may include an identification module which verifies a credential and/or an intent detection module which may for example track the user as described above in order to determine the user's intent to access. The modules may be arranged spaced apart from each other and communicating with each other.

The access decision point may be connected to a power grid and/or comprise a battery which is regularly to be replaced in order to prevent the access decision point from running out of energy. In a particular embodiment, the access decision point may be connected to a power grid and additionally comprise a battery in order to buffer potential blackouts in the power grid. The access control system then advantageously is capable of temporarily work during a blackout of a power grid.

The term low power access enforcement point may include any device that is capable of unlocking an access point. In particular, low power access enforcement points may not have decision taking capabilities for deciding whether to unlock or not based on the validity of a credential. Rather, the low power access enforcement points may be capable of performing or causing unlocking and/or locking a respective access point upon receiving a respective command. Each access enforcement point may be associated to an access point. For example, the access enforcement points may include an actuator for unlocking and/or locking the access point. Thus, in other words, the low power access enforcement points may be understood as stupid devices which may only execute commands without taking any decision, e.g., on whether a user has an intent to unlock or whether the user is allowed to access a respective access point. Further, the low power access enforcement points may be capable of low-power wireless communication in order to receive said commands, in particular from one or more access decision point(s). Due to this configuration of the low power access enforcement points, the low power access enforcement points may be operated with a very low energy consumption. This is beneficial because the need for maintenance is significantly reduced. In other words: A low power access enforcement point essentially only needs maintenance in case if it is damaged or in case if it runs out of energy. The low power access enforcement points may not be connected to a power grid in order to keep the installation effort low. Instead, the low power access enforcement points may comprise an electrical energy storage which may be a battery. In one embodiment, the battery may be replaced by a service technician after it runs out of energy. In another embodiment, which is the preferred embodiment, the low power access enforcement points comprise energy harvesting means that are capable of rechanging the battery, e.g., depending on ambient conditions and/or user interactions.

It may be provided that an access enforcement point unlocks an associated access point upon receiving an unlock-command from an access decision point. The access enforcement points may therefore include means for performing unlocking, e.g., a lock.

It may be provided that the access enforcement points and/or the access points include signaling means, in particular one or more, preferably each, of the access enforcement points may include a visual signaling means and/or an acoustic signaling means.

A visual signaling means may be a mechanical signaling means which indicates the state of a respective access point, i.e., whether the respective access point is locked or unlocked. In one embodiment, a position of the lock cylinder may cause a colored figure, symbol, element or the like. For example, the mechanical signaling means may indicate the following:
- The respective access enforcement point successfully performed unlocking or is in a unloced state. The mechanical signaling may include showing a colored element, e.g., colored dot. The colored element may have a color being indicative for a user that he may access the access point, e.g., being green.
- The respective access enforcement point successfully performed locking or is in a locked state. The mechanical signaling may include showing a colored element, e.g., colored dot. The colored element may have a color being indicative for a user that he may not access the access point, e.g., being red.

Providing a mechanical signaling means to an access enforcement point is particularly advantageous due to the fact that no electrical energy is needed for signaling. For that, the position of the mechanical cylinder may be used, as is widely common for standard mechanical door locks.

A visual signaling means may be a lamp which indicates one or more of the following:
- The respective access enforcement point successfully performed unlocking the respective access point. Such visual signaling may include activating a lamp, preferably for a predetermined period of time. The lamp may have a color being indicative for a user that he may access the access point, e.g., being green.
- The respective access enforcement point is currently not performing instruction-polling and/or is out of order, e.g., not able to perform unlocking due to a lack of energy. The lamp may have a color being indicative for a user that there is a problem with the respective access enforcement point, e.g., being red.

An acoustic signaling means may, e.g., be an audio output module which indicates one or more of the following:
- The respective access enforcement point successfully performed unlocking the respective access point. Such visual signaling may include outputting an audio signal, preferably for a predetermined period of time. The audio signal may be indicative for a user that he may access the access point, e.g., being a confirmation jingle and/or a voice output confirming access.
- The respective access enforcement point is currently not performing instruction-polling and/or is out of order, e.g., not able to perform unlocking due to a lack of energy. The audio signal be indicative for a user that there is a problem with the respective access enforcement point, e.g., being a rejection signal and/or a voice output including information with respect to a particular error state of the respective access enforcement point.

It may be provided that the access point is a postbox and/or a parcel box and/or a door and/or a lockable piece of furniture and/or an access restricted trigger mechanism. An access restricted trigger mechanism may be provided at an elevator, wherein unlocking the access restricted trigger mechanism causes the elevator to perform a predetermined action, e.g., moving to a specific floor or locking the elevator while keeping the elevator door open.

The energy harvesting means may include solar cells, preferably indoor solar cells, which are configured to charge the battery by transforming incident ambient light into electrical energy. Alternatively or additionally, the energy harvesting means may comprise a motion-energy based generator which is configured to transform motion energy into electrical energy, e.g., from the movement of a door or from the movement of a knob or door handle. The movement may be performed by a user. In case if the energy harvesting means comprises solar cells, a user may use any lamp to charge the battery immediately if a respective low power access enforcement point runs out of energy. For example, the user may use the lamp of his mobile device for this purpose.

The communication between the low power access enforcement points and the access decision point(s) may preferably be performed wirelessly via a low power communication protocol, such as Bluetooth Low Energy (BLE) or any other suitable low power communication protocols. The instruction polling by the low power access enforcement points may therefore be for example an advertising signal via Bluetooth.

The authentication medium may be a token, a badge, a mobile device, the user's body or a part of a user's body, e.g., being suitable for biometric detection, or the like. In case if the authentication medium is a user's body or a part of a user's body, the access decision point may perform camera tracking in order to determine whether the user intends to unlock a respective access point. Further, the access decision point may perform biometric authentication in order to check whether a respective user is allowed to access a respective access point. Biometric authentication may include for example face recognition, iris recognition or the like.

If the authentication medium is a token, badge or mobile device, the communication between the access decision point and the authentication medium may be performed wirelessly. In particular, the communication may include ultra-wideband transmissions and/or Bluetooth transmissions.

The step of instruction-polling including repeatedly sending instruction requests by the low power access enforcement points may be understood as a signal which, literally speaking, carries the message "does anyone have a command for me?". Any access decision point which receives this instruction request may respond accordingly with an unlock-command or a no-action command.

A no-action command may be a signal which is sent from the access decision point to a respective access enforcement point, or may be the absence of a signal that may be interpreted as a no-action-command by the access enforcement point, e.g., if no signal is received for a predetermined time period. In other words, the method may be implemented such as the access decision point does not respond to a poll of a respective access enforcement point, if there is no detected intent, wherein the respective access enforcement point interprets this non-responding as being a no-action commend, in particular after waiting for a response for a predetermined period of time.

The access enforcement points may comprise a wakeup sensor which may be used by a user in order to cause a respective access enforcement point to, preferably immediately, perform instruction-polling irrespective of the time interval. The wakeup sensor may be a button which may be presses by a user. Alternatively or additionally, the wakeup sensor may be a proximity sensor detecting that a user approaches at the respective low power access enforcement point. Alternatively or additionally, if the low power access enforcement point comprises a solar cell, preferably an indoor solar cell, the solar cell may be used as a wakeup sensor, in particular wherein the user may cover the solar cell, e.g., by his hand or body, causing a sudden drop in the amount of incident light which is interpreted as a wakeup signal.

From the perspective of an access decision point, a computer-implemented access control method may be provided, the method being performed by at least one access decision point being configured to communicate wirelessly with a plurality of access enforcement points, wherein the access enforcement points may have energy harvesting means and are not connected to a power grid. The method may comprise: detecting that at least one mobile device of a user is located in an wireless communication range of the access decision point; determining an intent of the user of the mobile device to unlock one access enforcement point of the plurality of access enforcement points; and determining whether the at least one mobile device has the permission to unlock the access enforcement point; sending, if the at least one mobile device has the permission to unlock the access enforcement point, an unlock command to the access enforcement point causing the access enforcement point to unlock.

It may be provided that generating a respective instruction including an unlock-command requires, for the determination of an intent, in particular in addition to the determination of an intent, determining the presence of a valid credential to unlock the respective access enforcement point, preferably wherein the credential is obtained from the authentication medium by access decision point.

The presence of a valid credential may be interpreted as a strong intent. Depending on the implementation of the present invention, an intent and/or a strong intent may be required.

It may be provided that the validity of the credential to unlock the respective access enforcement point is verified by a backend server with which the at least one access decision point communicates.

It may be provided that the determination of an intent is performed using an UWB-tracking process, comprising: successively executing ultra-wideband transmissions between ultra-wideband transceiver(s) and the authentication medium, preferably the ultra-wideband transceiver(s) being part of the at least one access decision point; and determining successive positions of the authentication medium by processing signal properties of the ultra-wideband transmissions; determining a respective movement trajectory of the authentication medium based on the determined successive positions.

Alternatively or additionally, tracking via Received Signal Strength Indicator (RSSI) based on Bluetooth may be provided. In this case, determining successive positions of the authentication medium is performed by processing successive RSSI values of an authentication medium. Thus, a respective movement trajectory of the authentication medium may be determined based on the successive positions.

It may be provided that the determination of an intent is performed using a camera-tracking process, comprising: determining, using at least one camera, successive positions of the user, preferably the at least one camera being part of the at least one access decision point; and determining a respective movement trajectory of the user based on the determined successive positions.

The method may comprise correlating the movement trajectory of the authentication medium with the movement trajectory of the user; and associating the authentication medium with the user based on the correlation.

By correlating the movement trajectory of the authentication medium with the movement trajectory of the user and associating the authentication medium with the user based on the correlation, the user and the user's authentication medium are matched such as being one entity. By that, any confusion due to an authentication medium that is spaced apart from the user, e.g., in a luggage, can be avoided.

With respect to possible ultra-wideband applications, it is referred to the following patent applications: WO2019/224329A1; WO2021/219492A1; WO2022090159A1; WO2022/253949A1.

It may be provided that the determination of an intent is performed through user input into the authentication medium being a mobile device, wherein the mobile device transmits the user input to the at least one access decision point, and preferably wherein the user input includes a selection of the respective access enforcement point which the user intends to unlock.

It may be provided that the no-action-command includes an interval adjustment instruction which causes the respective low-power access enforcement point to adjust the time interval for instruction-polling, preferably wherein the interval adjustment instruction is generated depending on a prediction whether an intent to unlock is expected and/or prediction of a frequency of intended access operations and/or depending on a time and/or depending on a day.

The above-described adjustment and/or prediction may be performed based on a machine-learning model. The machine-learning model may in particular dynamically adjust the time interval ad/or dynamically adjust the criteria which are considered for the adjustment. Historic data captured during operation of a corresponding access control system, may be used as training data for such machine-learning model. The machine-learning model may include a Convolutional Neural Network (CNN). Unsupervised machine-learning techniques may be used advantageously.

By adjusting the time interval depending on the expectation and/or prediction whether a user may approach with the intent to unlock a respective access point, the overall energy consumption is optimized. Therefore, the need for maintenance is reduced advantageously.

It may be provided that at least one, preferably all, of the plurality of access enforcement points communicate wirelessly with a plurality of access decision points, wherein if the at least one access enforcement point receives non-matching interval adjustment instructions including non-matching adjusted time intervals for instruction-polling, the shortest time intervals for instruction-polling is applied.

By this, an estimate is made for the secure side in order to prevent a user with an intent to unlock from standing in front of a locked access point that does not open and does not grant access.

It may be provided that the steps of generating the respective instruction and sending the respective instruction are performed for each of the low-power access enforcement points which performed instruction-polling, preferably separately.

By performing the above-mentioned steps for each of the low power access enforcement points, multiple low power access enforcement points may be controlled by one access decision point. Of course, vice versa, each low power access enforcement point may be controlled, i.e., may receive commands, from multiple access decision points. Due to this constellation where multiple low power access enforcement points and multiple access decision points are communicating, a reliable and robust access control system and method is provided. In particular, the access control system and method will still work, even if one access decision point is not working, e.g., due to an error.

It may be provided that the plurality of access enforcement points perform energy harvesting, using the energy harvesting means which include one or more of the following: electrical energy storage unit; indoor solar cells; motion-energy based generator.

It may be provided that the at least one access decision point performs observing at least part of the plurality of access enforcement points regarding whether instruction-polling is performed or not, e.g., due to an error. If the at least one access decision point determines that one low-power access enforcement point of the plurality of low-power access enforcement points does not perform instruction-polling, e.g., for a predetermined period of time, the at least one access decision point may output an alarm signal. The alarm signal may include one or more of the following: an acoustic signal, a visible light signal, an alarm signal which is sent by the at least one access decision point to a backend server with which the at least one access decision point communicates.

According to a second aspect of the present invention, a use of a plurality of low-power access enforcement points in a computer-implemented access control method according to the first aspect of the present invention, may be provided. The low-power access enforcement points may include: energy harvesting means, preferably an electrical energy storage unit and indoor solar cells and/or a motion-energy based generator; and a communication interface for communicating with at least one access decision point.

According to a third aspect of the present invention, a use of at least one access decision point in a computer-implemented access control method according to the first aspect of the present invention, may be provided. The access decision point may include: a first communication interface for communicating with a plurality of low-power access enforcement points via a low-power communication technology, preferably via Bluetooth Low Energy; a second communication interface for communicating with one or more mobile device(s) for performing access control routines; and optionally a third communication interface for communicating with a backend server for performing access control routines.

According to a fourth aspect of the present invention, a system may be provided, comprising at least one access decision point and a plurality of access enforcement points, being configured to perform a computer-implemented access control method according to the first aspect of the present invention.

According to a fifth aspect of the present invention, a computer program or a computer-readable medium may be provided, comprising instructions which, when the program is executed by a computer, cause the computer to carry out the method according to the first aspect of the present invention.

All technical implementation details and advantages described with respect to the first aspect of the present invention are self-evidently mutatis mutandis applicable for the second, third, fourth and fifth aspects of the present invention and vice versa.

According to a sixth aspect of the present invention, a computer-implemented access control method is provided, being performed by an access control system. The access control system may include a plurality of access decision points being configured to communicate wirelessly with a low-power access enforcement point. The low-power access enforcement point may be configured to operate an access point, in particular by unlocking and/or locking the access point. The low-power access enforcement point may have energy harvesting means. The low-power access enforcement point may not be connected to a power grid. The method may comprise instruction-polling, by the low-power access enforcement point, wherein instruction-polling includes repeatedly sending instruction requests to the plurality of access decision points in defined time intervals. The method may comprise generating, by one or more of the plurality of access decision point, a respective instruction dedicated to the low-power access enforcement point upon receiving a respective instruction request from the respective low-power access enforcement point, wherein if one or more of the plurality of access decision points detected an authentication medium, preferably a mobile device, of a user and determined an intent to unlock the access enforcement point, the respective access decision point(s) send the instruction including an unlock-command causing the low-power access enforcement point to unlock, and else, the instruction includes a no-action-command. The method may comprise sending, by the one or more of the plurality of access decision points, the respective instruction to the low-power access enforcement point. In particular, if the access enforcement point receives more than one instruction, i.e. from at least two of the plurality of access decision points, the access enforcement point processes the instructions and performs only one of the instructions. Processing may be performed depending on predefined criteria.

According to a seventh aspect of the present invention, a computer-implemented access control method is provided, being performed by an access control system. The access control system may include at least one access decision point being configured to communicate wirelessly with a plurality of low-power access enforcement points. Each low-power access enforcement point may be configured to operate an access point, in particular by unlocking and/or locking the access point. The low-power access enforcement points may have energy harvesting means. The low-power access enforcement points may not be connected to a power grid. The method may comprise instruction-polling, by the plurality of low-power access enforcement points, wherein instruction-polling includes repeatedly sending instruction requests to the at least one access decision point in defined time intervals. The method may comprise generating, by the at least one access decision point, a respective instruction dedicated to a respective low-power access enforcement point upon receiving a respective instruction request from the respective low-power access enforcement point, wherein if the at least one access decision point detected an authentication medium, preferably a mobile device, of a user and determined an intent to unlock the respective access enforcement point, the respective instruction includes an unlock-command causing the respective low-power access enforcement point to unlock, and else, no instruction, i.e., no response, is sent. The method may comprise sending, by the at least one access decision point, the respective instruction to the respective low-power access enforcement point. In the case if no instruction, i.e. no response, is sent, a respective access enforcement point may continue instruction polling without changing properties, e.g., the instruction polling interval.

According to an eighth aspect of the present invention, a computer-implemented access control method is provided, being performed by an access control system. The access control system may include at least one access decision point being configured to communicate wirelessly with a plurality of low-power access enforcement points. Each low-power access enforcement point may be configured to operate an access point, in particular by unlocking and/or locking the access point. The low-power access enforcement points may have energy harvesting means. The low-power access enforcement points may not be connected to a power grid. The energy harvesting means may be an indoor solar module. The method may comprise instruction-polling, by the plurality of low-power access enforcement points, wherein instruction-polling includes repeatedly sending instruction requests to the at least one access decision point in defined time intervals. The method may comprise generating, by the at least one access decision point, a respective instruction dedicated to a respective low-power access enforcement point upon receiving a respective instruction request from the respective low-power access enforcement point

If the at least one access decision point detected an authentication medium, preferably a mobile device, of a user and determined an intent to unlock the respective access enforcement point, the respective instruction may include an unlock-command causing the respective low-power access enforcement point to unlock, and else, the respective instruction may include a no-action-command. The method may comprise sending, by the at least one access decision point, the respective instruction to the respective low-power access enforcement point.

All technical implementation details and advantages described with respect to the first aspect of the present invention are self-evidently mutatis mutandis applicable for the sixth, seventh and eighth aspects of the present invention and vice versa.

### BRIEF DESCRIPTION OF THE DRAWINGS

The present invention will be explained in more detail, by way of example, with reference to the drawings in which:
- Figure 1: is a schematic perspective view of a building comprising an access control system implementing an access control method according to embodiments of the present invention.
- Figure 2: is a highly schematic perspective view of one access decision point, one access enforcement point and one user according to embodiments of the present invention.
- Figure 3: is a highly schematic top view in 2D of a building comprising an access control system implementing an access control method according to embodiments of the present invention.
- Figure 4a: is a flow chart diagram illustrating a first sequence of an access control method comprising an access control system implementing an access control method according to embodiments of the present invention.
- Figure 4b: is a flow chart diagram illustrating a second sequence of an access control method comprising an access control system implementing an access control method according to embodiments of the present invention.

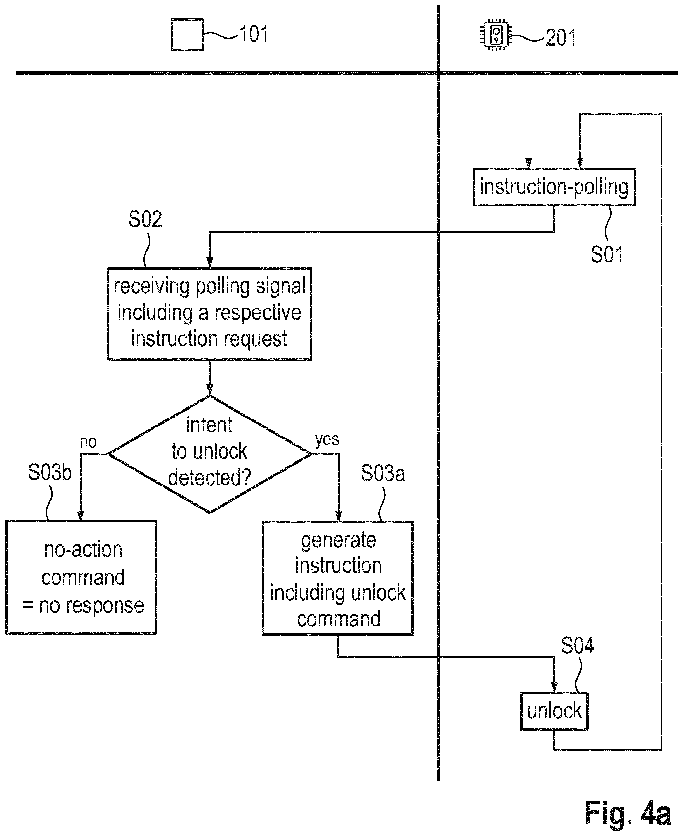

- Figure 4a: is a flow chart diagram illustrating a third sequence of an access control method comprising an access control system implementing an access control method according to embodiments of the present invention.

### FIGURATIVE DESCRIPTION OF EMBODIMENTS

In the following figurative description, the reference signs 101, 102, 103, 104, 105, 106, 107, 108 are abbreviated as 101, ..., 108; the reference signs 201, 202, 203, 204, 205, 206, 207, 208, 209, 210, 211, 212 are abbreviated as 201, ..., 212; the reference signs 201a, 202a, 203a, 204a, 205a, 206a, 207a, 208a, 209a, 210a, 211a, 212a are abbreviated as 201a, ..., 212a; the reference signs 301, 302, 303, 304 are abbreviated as 301, ..., 304; and the reference signs 301a, 302a, 303a, 304a are abbreviated as 301a, ..., 304a.

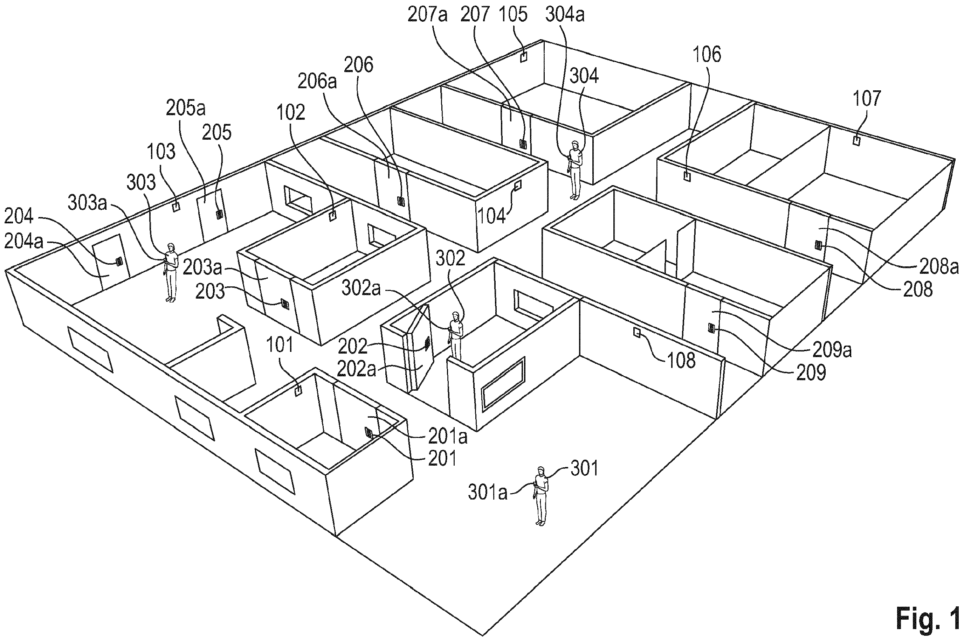

Figure 1 is a schematic perspective view of a building comprising an access control system implementing an access control method according to embodiments of the present invention. The building comprises a plurality of access points 201a, ..., 212a. Each access point 201a, ..., 212a comprises a respective access enforcement point 201, ..., 212 which includes, in the illustrated examle of figure 1, an actuator in the door leaf which is capable to unlock and/or lock the access point 201a, ..., 212a. Further, the building is equipped with a plurality of access decision points 101, ..., 108 which are distributed throughout the building. The access enforcement points 201, ..., 212 may perform instruction-polling S01 including repeatedly sending instruction requests to the access decision points 101, ..., 108 in defined time intervals. The Instruction requests are received S02 by at least part of the access decision points 101, ..., 108, e.g., by the access decision points 101, ..., 108 which are in wireless communication range of a respective access enforcement point 201, ..., 212.

As it is depicted in figure 1, a plurality of users 301, ..., 304 are in and near the building. Each user 301, ..., 304 has an authentication medium 301a, ..., 304a. The authentication mediums 301a, ..., 304a, according to the illustration of figure 1, are mobile devices capable of communicating wirelessly. If one access decision point 101, ..., 108 detects an authentication medium 301a, ..., 304a of a user 301, ..., 304, which may be a mobile device, and determines an intent of the user 301, ..., 304 to unlock a respective access enforcement point 201, ..., 212, the access decision point 101, ..., 108 generates an instruction and sends it to the respective access enforcement point 201, ..., 212 in response to the instruction polling. Generating the instruction may be only performed, if in addition to the intent, a valid credential is successfully validated by the access decision point 201, ..., 212. The respective instruction may include an unlock-command S03a causing the respective low-power access enforcement point 201, ..., 212 to unlock. Hence, the user 301, ..., 304 is able to access the respective access point 201a, ..., 212a. If no intent to unlock or no valid credential is detected by the access decision point 201, ..., 212, the instruction may be a no-action command S03b. The no-action command S03b may be also seen in undertaking no action, i.e., not responding at all.

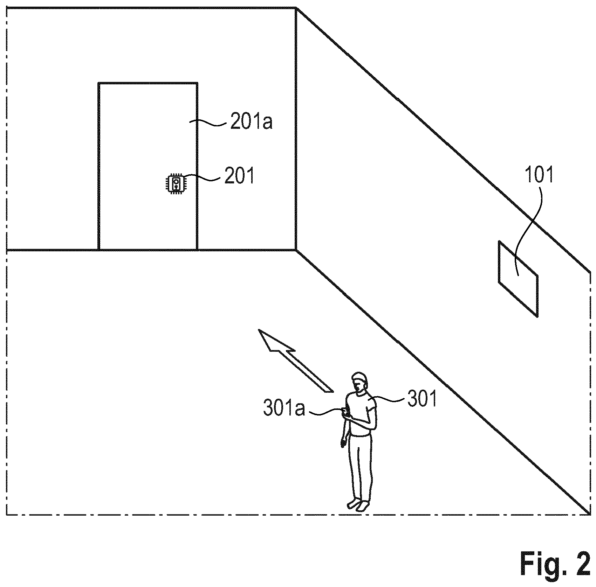

Figure 2 shows a zoomed in situation similar to figure 1. The user 301 has an authentication medium 301a which carries a valid credential for the access point 201a. The access decision point 101 communicates with the authentication medium 301a and detects an intent of the user 301 to access the access point 201a. For example, the intent detection may be carried out based on successive positions or a moving direction and/or speed of the authentication medium 301a. Alternatively, the intent may be detected based on the validity of the credential. This scenario set forward, the following will happen: The next time the access decision point 101 receives an instruction polling signal from the access enforcement point 201, it will respond an unlock-command causing the access enforcement point to unlock the access point 201a such that the user 301 can access the access point 201a.

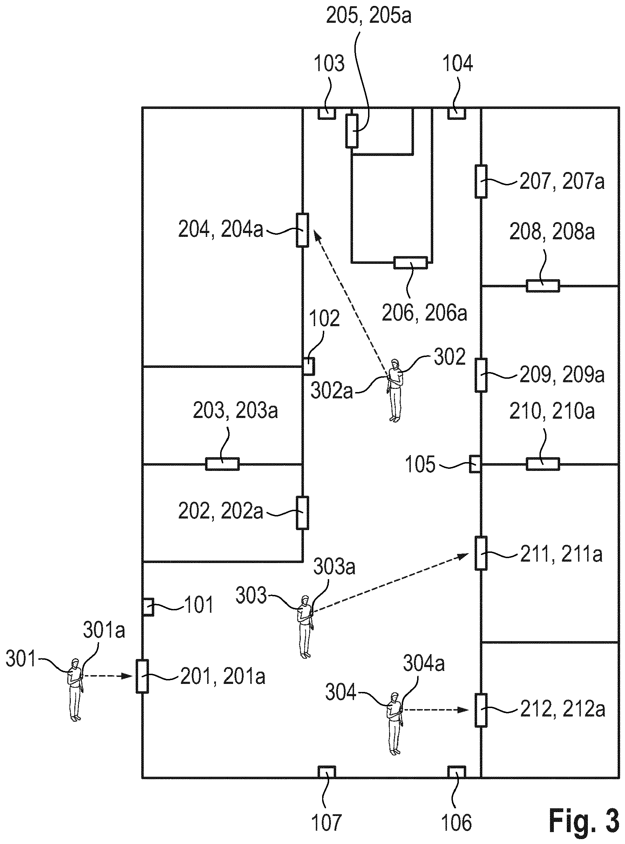

Figure 3 is similar to figure 1 but is illustrated in a 2D-view. Dotted arrows illustrate the intent respective users 301, 302, 303, 304 have. User 301 intends to access the access point 201a. User 301 intends to access the access point 204a. User 303 intends to access the access point 211a. User 304 intends to access the access point 212a. As can be seen, also users 301, ..., 304 outside the building may be provided with the access control method according to the present invention. Thus, the present invention is also applicable to main entrances.

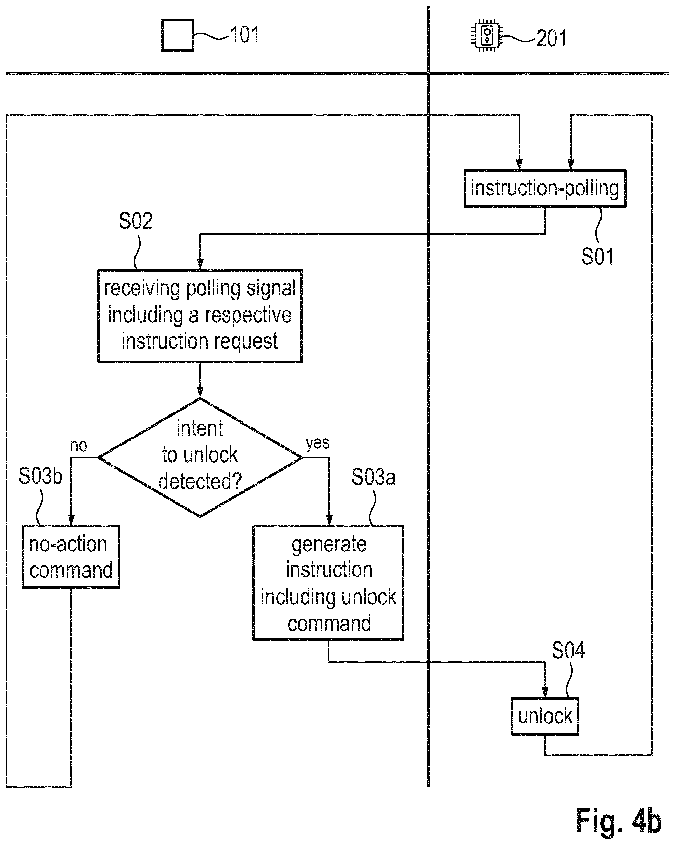

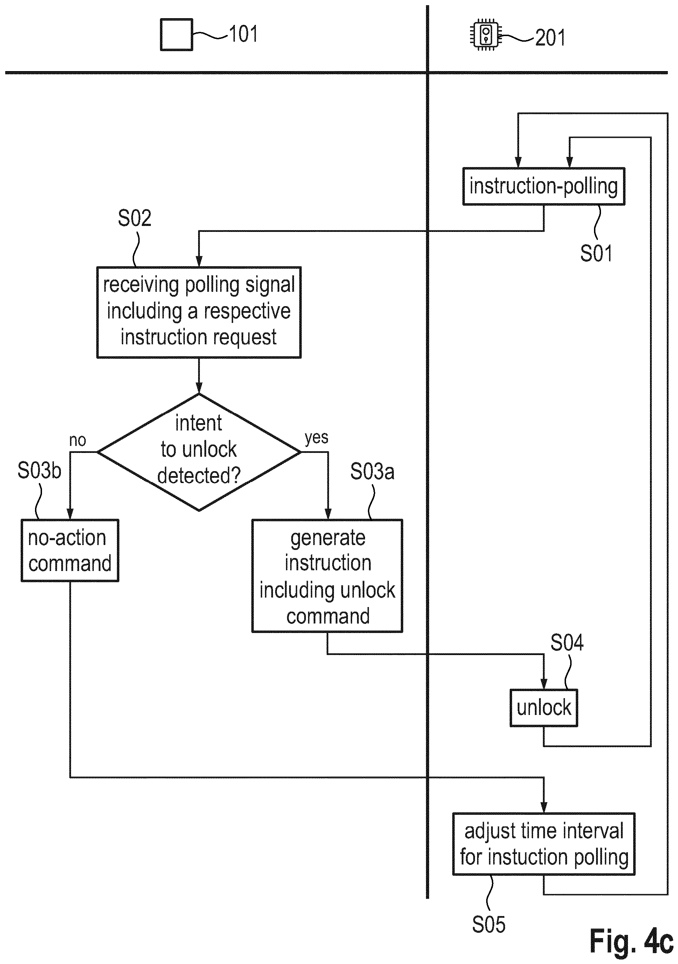

Figures 4a, 4b and 4c are high-level swim lane diagrams of the access control method according to the present invention. In figure 4a, an implementation is shown where a no-action command S03b is simply to not respond to the instruction polling S01 signal. In figure 4b, an implementation is shown where a no-action command S03b is sent to the access enforcement point 201 in response to the instruction polling S01. In figure 4c, an implementation is shown where a no-action command S03b is sent to the access enforcement point 201 in response to the instruction polling S01, wherein the no-action command S03b includes a command which causes that the access enforcement point 201 adjusts the time interval for instruction polling S01.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 101, ..., 108: access decision point
- 201, ..., 212: access enforcement point
- 201a, ..., 212a: access point
- 301, ..., 304: user
- 301a, ..., 304a: authentication medium
- S01: instruction-polling
- S02: receiving polling signal including a respective instruction request
- S03a: generate instruction including unlock command
- S03b: no-action command
- S04: unlock

## Claims

1. A computer-implemented access control method being performed by an access control system, the access control system including at least one access decision point (101, ..., 108) being configured to communicate wirelessly with a plurality of low-power access enforcement points (201, ..., 212), wherein each low-power access enforcement point is configured to operate an access point (201a, ..., 212a), in particular by unlocking and/or locking the access point (201a, ..., 212a), preferably wherein the low-power access enforcement points (201, ..., 212) have energy harvesting means and are not connected to a power grid, the access control method comprising:
instruction-polling (S01), by the plurality of low-power access enforcement points (201, ..., 212), wherein instruction-polling includes repeatedly sending instruction requests to the at least one access decision point (101, ..., 108) in defined time intervals;
generating, by the at least one access decision point (101, ..., 108), a respective instruction dedicated to a respective low-power access enforcement point (201, ..., 212) upon receiving a respective instruction request (S02) from the respective low-power access enforcement point (201, ..., 212), wherein
if the at least one access decision point (101, ..., 108) detected an authentication medium (301a, ..., 304a) of a user (301, ..., 304), preferably a mobile device, and determined an intent to unlock the respective access enforcement point (201, ..., 212), the respective instruction includes an unlock-command (S03a) causing the respective low-power access enforcement point (201, ..., 212) to unlock, and
else, the respective instruction includes a no-action-command (S03b);
sending, by the at least one access decision point (101, ..., 108), the respective instruction to the respective low-power access enforcement point (201, ..., 212).

2. The computer-implemented access control method of claim 1, wherein generating a respective instruction including an unlock-command (S03a) requires, for the determination of an intent, determining the presence of a valid credential to unlock the respective access enforcement point (201, ..., 212), preferably wherein the credential is obtained by access decision point (101, ..., 108) from the authentication medium (301a, ..., 304a).

3. The computer-implemented access control method of claim 2, wherein the validity of the credential to unlock the respective access enforcement point (201, ..., 212) is verified by a backend server with which the at least one access decision point (101, ..., 108) communicates.

4. The computer-implemented access control method of any one of the preceding claims, wherein the determination of an intent is performed using an UWB-tracking process, comprising:
successively executing ultra-wideband transmissions between ultra-wideband transceiver(s) and the authentication medium (301a, ..., 304a), preferably the ultra-wideband transceiver(s) being part of the at least one access decision point (101, ..., 108);
determining successive positions of the authentication medium (301a, ..., 304a) by processing signal properties of the ultra-wideband transmissions;
determining a respective movement trajectory of the authentication medium (301a, ..., 304a) based on the determined successive positions.

5. The computer-implemented access control method of any one of the preceding claims, wherein the determination of an intent is performed using a camera-tracking process, comprising:
determining, using at least one camera, successive positions of the user (301, ..., 304), preferably the at least one camera being part of the at least one access decision point (101, ..., 108);
determining a respective movement trajectory of the user (301, ..., 304) based on the determined successive positions.

6. The computer-implemented access control method of claim 4 and 5, further comprising:
correlating the movement trajectory of the authentication medium (301a, ..., 304a) with the movement trajectory of the user (301, ..., 304);
associating the authentication medium (301a, ..., 304a) with the user (301, ..., 304) based on the correlation.

7. The computer-implemented access control method of any one of the preceding claims, wherein the determination of an intent is performed through user input into the authentication medium (301a, ..., 304a) being a mobile device, wherein the mobile device transmits the user input to the at least one access decision point (101, ..., 108), and preferably wherein the user input includes a selection of the respective access enforcement point (201, ..., 212) which the user (301, ..., 304) intends to unlock.

8. The computer-implemented access control method of any one of the preceding claims, wherein the no-action-command includes an interval adjustment instruction which causes the respective low-power access enforcement (201, ..., 212) point to adjust the time interval (S04) for instruction-polling (S01), preferably wherein the interval adjustment instruction is generated depending on a prediction whether an intent to unlock is expected and/or prediction of a frequency of intended access operations and/or depending on a time and/or depending on a day.

9. The computer-implemented access control method of claim 8, wherein at least one of the plurality of access enforcement points (201, ..., 212) communicate wirelessly with a plurality of access decision points (101, ..., 108), wherein if the at least one access enforcement point (201, ..., 212) receives a plurality of interval adjustment instructions (S05) which do not match each other including non-matching adjusted time intervals for instruction-polling (S01), the shortest time interval for instruction-polling (S01) is applied.

10. The computer-implemented access control method of any one of the preceding claims, wherein the steps of generating the respective instruction and sending the respective instruction are performed for each of the low-power access enforcement points (201, ..., 212) which performed instruction-polling (S01), preferably separately.

11. The computer-implemented access control method of any one of the preceding claims, wherein if the at least one access decision point (101, ..., 108) determines that one low-power access enforcement point (201, ..., 212) of the plurality of low-power access enforcement points (201, ..., 212) does not perform instruction-polling (S01), optionally for a predetermined period of time, the at least one access decision point (101, ..., 108) outputs an alarm signal, wherein the alarm signal may include one or more of the following: an acoustic signal, a visible light signal, an alarm signal which is sent by the at least one access decision point (101, ..., 108) to a backend server with which the at least one access decision point (101, ..., 108) communicates.

12. The computer-implemented access control method of any one of the preceding claims, wherein the plurality of access enforcement points (201, ..., 212) perform energy harvesting, using the energy harvesting means which include one or more of the following: electrical energy storage unit; indoor solar cells; motion-energy based generator.

13. The computer-implemented access control method of any one of the preceding claims, wherein the access point(s) (201a, ..., 212a) is/are a postbox and/or a parcel box and/or a door and/or a lockable piece of furniture and/or an access restricted trigger mechanism.

14. Use of a plurality of low-power access enforcement points in a computer-implemented access control method of one of claims 1 to 13, the low-power access enforcement points (201, ..., 212) including:
energy harvesting means, preferably an electrical energy storage unit and indoor solar cells and/or a motion-energy based generator;
a communication interface for communicating with at least one access decision point.

15. A system comprising at least one access decision point (101, ..., 108) and a plurality of access enforcement points (201, ..., 212), being configured to perform a computer-implemented access control method of one of claims 1 to 13.
